(19) Europäisches Patentamt
European Patent Office
Office européen des brevets

(11) EP 4 593 173 A2

(12) EUROPEAN PATENT APPLICATION

(43) Date of publication:
30.07.2025 Bulletin 2025/31

(21) Application number: 25153075.4

(22) Date of filing: 21.01.2025

(51) International Patent Classification (IPC):
H01M 50/15 $^{(2021.01)}$     H01M 50/176 $^{(2021.01)}$
H01M 50/188 $^{(2021.01)}$     H01M 50/553 $^{(2021.01)}$

(52) Cooperative Patent Classification (CPC):
H01M 50/553; H01M 50/15; H01M 50/176;
H01M 50/188

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.01.2024 CN 202420193105 U

(71) Applicant: AESC Japan Ltd.
Yokohama-Shi, Kanagawa 220-0012 (JP)

(72) Inventors:
• CHEN, Hu
Wuxi City, Jiangsu Province 214443 (CN)
• ZHAO, Gongwei
Wuxi City, Jiangsu Province 214443 (CN)
• CAO, Xingyu
Wuxi City, Jiangsu Province 214443 (CN)

(74) Representative: Becker, Eberhard
Becker Kurig & Partner
Patentanwälte mbB
Bavariastraße 7
80336 München (DE)

(54) COVER ASSEMBLY, SECONDARY BATTERY, BATTERY ASSEMBLY AND ELECTRONIC DEVICE

(57) A cover assembly (200) as well as a secondary battery, a battery assembly and an electronic device using the cover assembly (200) of the present disclosure includes a cover body (201) opened with an electrode pillar mounting hole (2011, 2012); an electrode terminal (202a, 202b) including a bottom plate (2021a, 2021b) disposed on one side of the cover body (201); and an electrode pillar (2022a, 2022b) disposed on the bottom plate (2021a, 2021b); a sealing ring (203a, 203b) that is disposed around the electrode pillar (2022a, 2022b) and at least partially disposed between the cover body (201) and the bottom plate (2021a, 2021b); a position-limiting structure provided on at least one of the electrode terminal (202a, 202b) and the sealing ring (203a, 203b) for limiting the movement of the sealing ring (203a, 203b) in the thickness direction of the cover body (201).

FIG. 6

EP 4 593 173 A2

## Description

BACKGROUND

Technical Field

The disclosure relates to the technical field of power batteries, and specifically to a cover assembly for a secondary battery housing, a secondary battery using the cover assembly, a battery assembly having the secondary battery, and an electronic device having the battery assembly.

Description of Related Art

The existing power batteries may be classified into square batteries, cylindrical batteries and soft pack batteries according to the form the battery is packaged. Specifically, the square battery includes a metal housing and a square battery core built into the metal housing. The square battery core is normally composed of a housing, a top cover and an electrode assembly.

In related art, China Patent Publication No. CN213716966U discloses a top cover structure of a square battery core, which includes a cover provided with a positive electrode pillar mounting hole and a negative electrode pillar mounting hole, as well as a positive electrode pillar and a negative electrode pillar mounted in the positive electrode pillar mounting hole and the negative electrode pillar mounting hole and higher than the upper surface of the cover at a predetermined height. Moreover, there are sealing rings disposed around the positive electrode pillar and the negative electrode pillar. The sealing ring ensures that there will be no air leakage at the positive electrode pillar and negative electrode pillar, thereby improving the overall air tightness of the square battery core.

In the above-mentioned related art, after the sealing rings are disposed around the positive electrode pillar and the negative electrode pillar, if the sealing rings are misaligned, the overall sealing performance of the battery core will be affected.

SUMMARY

In view of the above problems, the present disclosure provides a cover assembly and a secondary battery using the cover assembly. A sealing ring may be compressed and sealed according to a preset position, thereby ensuring the sealing performance of the cover assembly and the secondary battery using the cover assembly.

The cover assembly provided by the disclosure includes a cover body opened with an electrode pillar mounting hole; an electrode terminal including a bottom plate disposed on one side of the cover body; and an electrode pillar disposed on the bottom plate, at least partially passing through the electrode pillar mounting hole, and extending along the thickness direction of the cover body to the other side of the cover body; a sealing ring that is disposed around the electrode pillar and at least partially disposed between the cover body and the bottom plate; a position-limiting structure provided on at least one of the electrode terminal and the sealing ring for limiting the movement of the sealing ring in the thickness direction of the cover body.

According to the technical solution of the present disclosure, because the electrode terminal or the sealing ring is provided with a position-limiting structure, the sealing ring disposed around the electrode pillar may be restricted from moving even if there are bumps, collisions and other influences in subsequent processes. Therefore, when the sealing ring is compressed and sealed, the sealing ring is limited to a preset position to ensure the sealing performance of the cover assembly.

In a preferred technical solution, in the cover assembly provided by the present disclosure, the position-limiting structure includes a position-limiting portion provided on the outer wall of the electrode pillar, and the sealing ring is partially disposed between the position-limiting portion and the bottom plate.

In a preferred technical solution, the position-limiting portion is disposed on the outer wall of the electrode pillar, and may be integrally formed with the electrode pillar, and the space between the bottom plate and the position-limiting portion is utilized to accommodate the sealing ring. Therefore, a simple structure may be used to limit the sealing ring and ensure the sealing performance of the cover assembly.

In a preferred technical solution, in the cover assembly provided by the present disclosure, at least the part of the sealing ring close to the outer wall of the sealing ring is disposed between the cover body and the bottom plate; at least the part of the sealing ring close to the inner wall of the sealing ring is disposed between the position-limiting portion and the bottom plate.

In a preferred technical solution, a part of the sealing ring close to the outer wall is squeezed between the cover body and the bottom plate. The sealing ring is partially compressed and deformed to achieve sealing of the cover assembly. In the meantime, the position-limiting portion contacts the bottom plate and fixes the part of the sealing ring close to inner wall, thereby limiting the possible movement of the sealing ring to ensure that the sealing ring is in the preset ideal position when the cover body and the bottom plate squeeze the sealing ring, thus ensuring the sealing performance of the cover assembly.

In a preferred technical solution, in the cover assembly provided by the present disclosure, at least the part of the sealing ring close to the inner wall of the sealing ring is higher than at least the part of the sealing ring close to the outer wall of the sealing ring, and the position-limiting portion is in contact with the sealing ring.

In the cover assembly in the preferred technical solution, at least the part of the sealing ring close to the inner wall is higher than at least the part of the sealing ring close to the outer wall, that is, the height of the sealing ring after being squeezed by the cover body in contact with the bottom plate (the height of the part of the sealing ring close to the outer wall) is less than the height of part of the sealing ring fixed by the position-limiting portion in contact with the bottom plate (the height of the part of the sealing ring close to the inner wall). In other words, more compression deformation are generated corresponding to the part of the sealing ring squeezed by the cover body in contact with the bottom plate to ensure the sealing performance of the cover assembly, while the part of the sealing ring fixed by the position-limiting portion in contact with the bottom plate does not need excessive compression deformation and only needs to be fixed and in contact with the position-limiting portion without being shifted. In this way, it is possible to ensure the sealing effect of the cover assembly while ensuring that the sealing ring is limited.

In a preferred technical solution, in the cover assembly provided by the present disclosure, the position-limiting portion includes a protruding portion disposed on the outer wall of the electrode pillar, and at least the part of the sealing ring close to the inner wall of the sealing ring is accommodated in the accommodation space formed by the protruding portion, the outer wall of part of the electrode pillar and the bottom plate. Alternatively, the position-limiting portion includes a recessed portion disposed on the outer wall of the electrode pillar, and at least the part of the sealing ring close to the inner wall of the sealing ring is accommodated in the recessed space formed by the recessed portion and the bottom plate.

In the cover assembly provided in the preferred technical solution, the protruding portion or the recessed portion on the outer wall of the electrode pillar may be integrally formed with the electrode pillar, and the accommodation space formed by the protruding portion, the outer wall of part of the electrode pillar and the bottom plate may be utilized, or the accommodation space formed by the recessed portion and the bottom plate may be utilized to limit the position of the sealing ring with a simple structure and low cost without additional components. In this way, it is possible to ensure the sealing performance of the cover assembly.

In a preferred technical solution, in the cover assembly provided by the present disclosure, the protruding portion or the recessed portion is disposed around the outer wall of the electrode pillar.

In the cover assembly provided in the preferred technical solution, the protruding portion or the recessed portion corresponds to an annular sealing ring, which is disposed around the outer wall of the electrode pillar, so that the part of the sealing ring close to the inner wall may be better fitted to limit the sealing ring in a stable and reliable manner.

In a preferred technical solution, in the cover assembly provided by the present disclosure, the protruding portion includes a plurality of protrusions disposed in an array on the outer wall of the electrode pillar along the circumferential direction of the electrode pillar; or, the protruding portion is a flange structure disposed around the outer wall of the electrode pillar along a circumferential direction of the electrode pillar.

In the cover assembly provided in the preferred technical solution, either multiple protrusions disposed in an array on the outer wall of the electrode pillar or the flange structure disposed on the outer wall of the electrode pillar can be configured as a simple structure without additional component and is adopted to be integrally formed with the electrode pillar at a low cost to limit the sealing ring, thereby ensuring the sealing performance of the cover assembly.

In a preferred technical solution, in the cover assembly provided by the present disclosure, the first contact surface formed by the part of the edge portion of the electrode pillar mounting hole in contact with the sealing ring is closer to the bottom plate than the second contact surface formed by the part of the position-limiting portion in contact with the sealing ring.

In the cover assembly provided in the preferred technical solution, the first contact surface formed by the cover body in contact with and squeezing with the bottom plate is closer to the bottom plate than the second contact surface formed by the position-limiting portion in contact with the sealing ring. That is, part of the sealing ring of the first contact surface produces more compression deformation to ensure the sealing performance of the cover assembly, whereas part of the sealing ring of the second contact surface (the part of the sealing ring fixed by the position-limiting portion in contact with the bottom plate) does not need excessive compression deformation and only needs to be able to be firmly in contact with the position-limiting portion without being shifted. In this way, it is possible to ensure the sealing effect of the cover assembly while ensuring the limitation on the sealing ring.

In a preferred technical solution, in the cover assembly provided by the present disclosure, the part of the sealing ring corresponding to the first contact surface has a thickness H1 in the thickness direction of the cover body, and the part of the sealing ring corresponding to the second contact surface has a thickness H2 in the thickness direction of the cover body, wherein a relationship between the thickness H1 and the thickness H2 satisfies the mathematical formula:

$$0.2*H2 < H1 < 0.8*H2.$$

The cover assembly provided in the preferred technical solution satisfies the condition of the mathematical formula 0.2*H2<H1<0.8*H2, thereby taking into account the relationship between the compression rate of the first contact surface that serves the sealing function and the compression rate of the second contact surface that serves the position-limiting function in the thickness direction of the cover, thereby ensuring both good position-limiting effect and compression sealing performance.

In a preferred technical solution, in the cover assembly provided by the present disclosure, the protruding portion protrudes from the outer wall of the electrode pillar by a protruding height L1, the recessed portion is recessed into the outer wall of the electrode pillar by a recessing depth L2, and the difference between the inner diameter and the outer diameter of the sealing ring is A, wherein the relationship between the protruding height L1 or the recessing depth L2 and the difference A satisfies the mathematical formula: $1/10A < L1 < 1/3A$ or $1/10A < L2 < 1/3A$.

In the cover assembly provided in the preferred technical solution, the difference A between the inner and outer diameters of the sealing ring in the radial direction, which is the radial width of the sealing ring body, satisfies the mathematical formula $1/10A < L < 1/10A$. That is to say, 1/10 or more and 1/3 or less of the radial width of the sealing ring body is in contact with the protruding portion or the recessed portion to fix and limit the sealing ring. In this way, it is possible to comprehensively take into account the relationship between the compression rate of the first contact surface that serves the sealing function and the proportion of the second contact surface that serves the limiting function in the thickness direction perpendicular to the cover, thereby ensuring both the position-limiting effect and the compression sealing performance.

In a preferred technical solution, in the cover assembly provided by the present disclosure, the relationship between the width W of the accommodation space in the thickness direction of the cover body and the initial thickness D of the sealing ring before being compressed satisfies the mathematical formula: $0.7D < W < 0.95D$.

In the cover assembly provided in preferred technical solution, the part of the sealing ring disposed in the accommodation space has a compression deformation ratio of 70% or more and 95% or less in the thickness direction of the cover body compared with the initial thickness D before the sealing ring is compressed. This numerical range ensures that the sealing ring disposed in the accommodation space is partially compressed and deformed to stabilize the position, while not being overly compressed to avoid unnecessary impact on other parts of the sealing ring.

In a preferred technical solution, in the cover assembly provided in the present disclosure, the position-limiting structure is an adhesive layer disposed at the contact surface between the sealing ring and the electrode pillar.

In the cover assembly in the preferred technical solution, the adhesive layer has a simple structure and is relatively inexpensive, and may be implemented without changing the shape of the outer wall of the existing electrode pillar.

In a preferred technical solution, in the cover assembly provided in the present disclosure, the adhesive layer is preset on the outer wall side of the electrode pillar and bonded to the inner side of the sealing ring, or the adhesive layer is preset on the bottom plate side and bonded to the sealing ring. The adhesive layer is preset on a side of the sealing ring close to the bottom plate and bonded to the bottom plate, or the adhesive layer is preset on the inner side of the sealing ring and bonded to the outer wall of the electrode pillar.

In the cover assembly provided in the preferred technical solution, the adhesive layer may be preset at different positions. When the adhesive layer is preset on the outer wall side or the bottom plate side of the electrode pillar, or when the sealing ring is close to the bottom plate side, during the process of disposing the sealing ring on the electrode pillar, the sealing ring will not be fixed and bonded until the sealing ring reaches the preset position. Therefore, the bonding position will be accurate and not deviated, and thus ensuring accurate limitation on the sealing ring.

In another aspect, the present disclosure also provides a secondary battery, including a housing with an upper opening, an electrode assembly inserted into the housing through the upper opening, and a top cover closing the upper opening, wherein the top cover is a cover assembly provided in any one of the technical solutions provided above.

In another aspect, the present disclosure also provides a battery assembly, including the secondary battery provided in any of the above technical solutions.

The present disclosure also provides an electronic device equipped with the battery assembly provided in any of the above technical solutions.

For the secondary battery, battery assembly and electronic device provided by the present disclosure, because the sealing performance of the adopted cover assembly is good, it may be ensured that the overall sealing performance of the secondary battery and battery assembly is good.

BRIEF DESCRIPTION OF THE DRAWINGS

FIG. 1 is a three-dimensional schematic view of the top cover structure of the related art.

FIG. 2 is a partial cross-sectional view of the top cover structure of the related art.

FIG. 3 is a three-dimensional exploded view of the cover assembly provided by the first embodiment of the present disclosure.

FIG. 4 is a top view of the cover assembly in FIG. 4.

FIG. 5 is a cross-sectional view of FIG. 5 taken along line A-A.

FIG. 6 is a partial enlarged view of part B shown in FIG. 5.

FIG. 7 is a partial cross-sectional view of the electrode pillar.

FIG. 8 is a schematic structural view of the electrode pillar.

FIG. 9 is a partial enlarged view of part D shown in FIG. 6.

FIG. 10 is a schematic view of the sealing ring structure.

FIG. 11 is a partial schematic view of the cover assembly provided by the second embodiment of the present disclosure.

FIG. 12 is a partial schematic view of the cover assembly provided by the second embodiment of the present disclosure.

FIG. 13 is a partial schematic view of the cover assembly provided by the second embodiment of the present disclosure.

FIG. 14 is a partial schematic view of the cover assembly provided by the second embodiment of the present disclosure.

FIG. 15 is a three-dimensional exploded view of the secondary battery provided by the third embodiment of the present disclosure.

DESCRIPTION OF THE EMBODIMENTS

The technical solutions in the embodiments of the present disclosure will be clearly and thoroughly described below with reference to the accompanying drawings in the embodiments of the present disclosure. Clearly, the described embodiments are only part of the embodiments of the present disclosure, not all implementations. Based on the embodiments of the present disclosure, all other embodiments obtained by those of ordinary skill in the art without creative efforts fall within the scope to be protected by the present disclosure.

It should be noted that in the description of the present disclosure, terms indicating positional relationships such as "upper", "lower", "front", "back", "left" and "right" are based on the directions or positional relationships shown in the drawings, or expressions with reference to relative positions. The terms are provided only to facilitate those skilled in the art to understand the present disclosure more clearly, but do not indicate or imply that the device or component must have a specific orientation or be constructed and operated in a specific orientation. Therefore, the above terms cannot be construed as a limitation to the present disclosure.

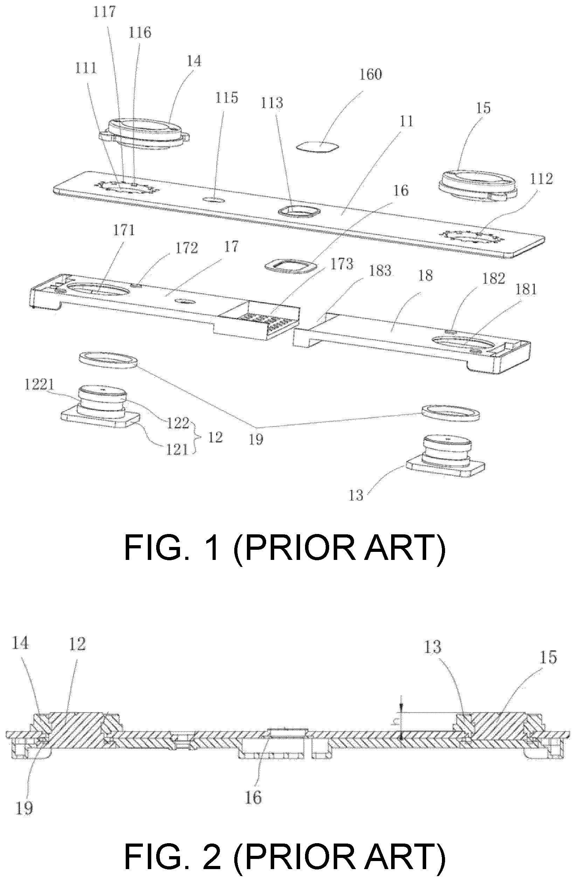

FIG. 1 and FIG. 2 are schematic views of a top cover structure in the related art. In the drawings, the sealing ring 19 is disposed around a part of the pillar 122 near the square bottom 121 to cooperate with the lower positive electrode plastic plate 17 to achieve sealing.

After the sealing ring 19 is assembled on the positive electrode pillar 12 and the negative electrode pillar 13, the positive electrode pillar 12 and the negative electrode pillar 13 pass through the first through hole 171 and the second through hole 172 to be mounted on the cover 11, and then subsequent process is carried out.

However, in the top cover structure of related art, when the sealing ring 19 is assembled on the positive electrode pillar 12 and the negative electrode pillar 13 at positions close to the square bottom 121 respectively, the sealing ring 19 is in the state of being temporarily disposed on the positive electrode pillar 12 and the negative electrode pillar 13. In the subsequent process of making the positive pillar electrode 12 and the negative electrode pillar 13 to pass through the through holes to be mounted on the cover 11 or other subsequent process, the sealing ring 19 that temporarily sleeves through the positive electrode pillar 12 and the negative electrode pillar 13 is likely to fall off or move to a non-predetermined position due to collision or bumping. In that case, subsequently, when the cover 11 compresses and seals the sealing ring 19, the compression position might be inappropriate or the compression area might be insufficient, and consequently the sealing performance might be affected.

Therefore, in order to solve the problem as described above in the related art that the sealing ring 19 might be displaced after being disposed around the positive electrode pillar 12 and the negative pillar electrode 13, embodiments of the present disclosure provide a new cover assembly.

<First Embodiment>

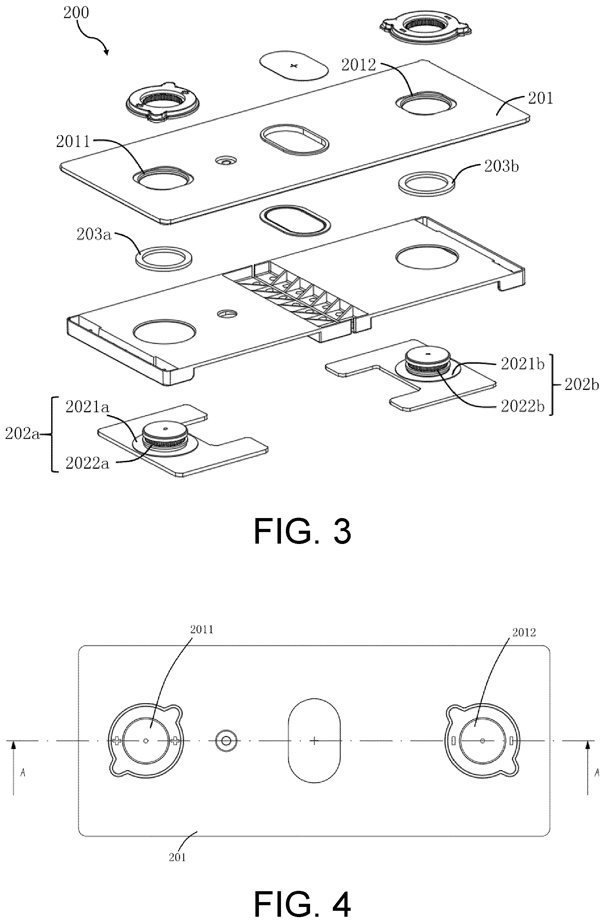

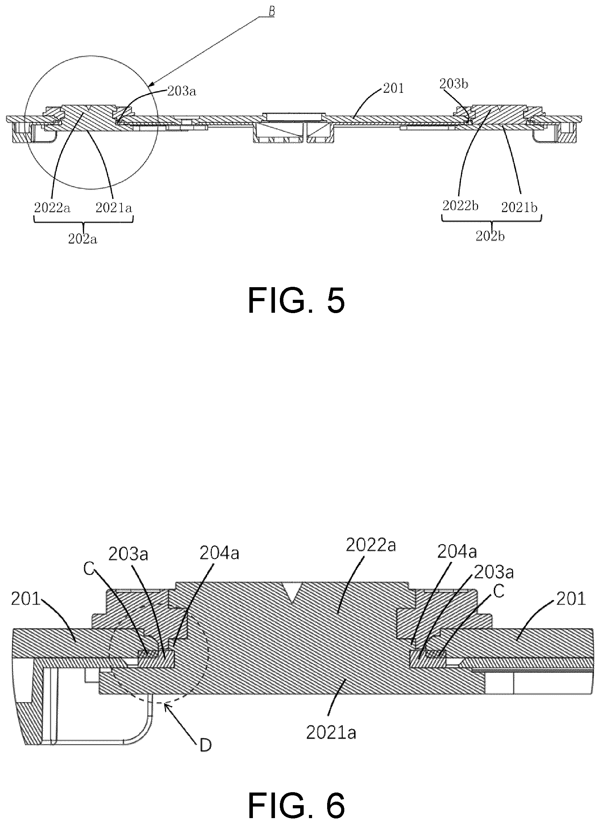

FIG. 3 is a three-dimensional exploded view of a cover assembly provided in the first embodiment of the present disclosure. FIG. 4 is a top view of the cover assembly. FIG. 5 is a cross-sectional view of FIG. 5 taken along line A-A. FIG. 6 is a partial enlarged view of part B shown in FIG. 5.

As shown in FIG. 3, FIG. 4, FIG. 5 and FIG. 6, the cover assembly 200 includes a cover body 201, a first electrode terminal 202a and a second electrode terminal 202b, a first sealing ring 203a and a second sealing ring 203b, as well as a first position-limiting portion 204a (position-limiting structure) and a second position-limiting portion 204b (position-limiting structure) respectively disposed on the first electrode terminal 202a and the second electrode terminal 202b.

Specifically, the cover body 201 is opened with a first electrode pillar mounting hole 2011 and a second electrode pillar mounting hole 2012. The first electrode terminal 202a and the second electrode terminal 202b respectively include a first bottom plate 2021a and a second bottom plate 2021b located on one side of the cover body 201, as well as the first electrode pillar 2022a and the second electrode pillar 2022b that are respectively disposed on the first bottom plate 2021a and the second bottom plate 2021b and at least partially pass through the first electrode pillar mounting hole 2011 and the second electrode pillar mounting hole 2012 while extending along the thickness direction of the cover body 201 to the other side of the cover body 201.

The first position-limiting portion 204a (position-limiting structure) and the second position-limiting portion 204b (position-limiting structure) on the first electrode terminal 202a and the second electrode terminal 202b are formed by protruding from the outer walls of the first electrode pillar 2022a and the second electrode pillar 2022b, and the first sealing ring 203a and the second sealing ring 203b are disposed around the first electrode pillar 2022a and the second electrode pillar 2022b. Specifically, the first sealing ring 203a and the second sealing ring 203b are disposed around the first electrode pillar 2022a and the second electrode pillar 2022b in a manner that a part of the first sealing ring 203a (the inner part of the first sealing ring 203a) is located between the first position-limiting portion 204a and the first bottom plate 2021a, and a part of the second sealing ring 203b (the inner part of the second sealing ring 203b) is located between the second position-limiting portion 204b and the second bottom plate 2021b.

When assembling the cover assembly 200, since the first sealing ring 203a and the second sealing ring 203b are respectively disposed around the first electrode pillar 2022a and the second electrode pillar 2022b, the parts of the first sealing ring 203a and the second sealing ring 203b close to the inner walls thereof are respectively located between the first position-limiting portion 204a and the first bottom plate 2021a, and between the second position-limiting portion 204b and the second bottom plate 2021b, so that the movement of the first sealing ring 203a and the second sealing ring 203b that are disposed around the first electrode pillar 2022a and the second electrode pillar 2022b is limited. Even if there are bumps, collisions and other influences occurred during subsequent processes, the sealing ring disposed around the electrode pillar will not shift. Therefore, when the first electrode pillar 2022a and the second electrode pillar 2022b and the like are moved in the subsequent process, the first sealing ring 203a and the second sealing ring 203b are limited to the preset position, that is, they will not move or be dislocated in the thickness direction (the Y direction in the figure) of the cover body 201. In subsequent process, by making the first electrode pillar 2022a and the second electrode pillar 2022b to pass through the first electrode pillar mounting hole 2011 and the second electrode pillar mounting hole 2012, part of the cover body 201 (i.e., part of the cover body around the first electrode pillar mounting hole 2011 and the second electrode pillar mounting hole 2012) is able to accurately press parts of the first sealing ring 203a and the second sealing ring 203b close to the outer walls thereof respectively (i.e., the compressed part C shown in FIG. 6) in the processing of assembling the cover body 201, the first electrode terminal 202a and the second electrode terminal 202b. In this way, it is possible to ensure realization of the sealing performance of the cover assembly 200.

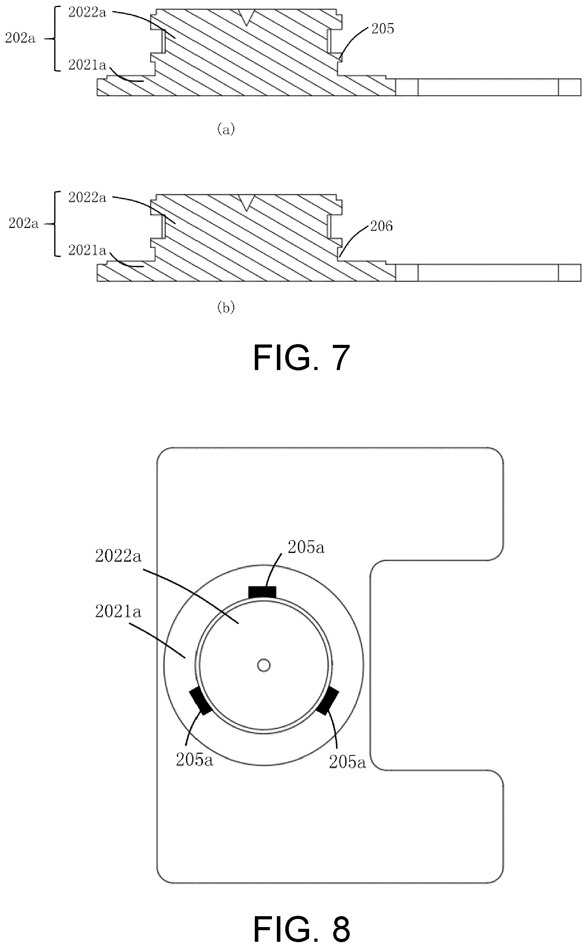

In a preferred embodiment, the first position-limiting portion 204a (position-limiting structure) and the second position-limiting portion 204b (position-limiting structure) disposed on the outer walls of the first electrode pillar 2022a and the second electrode pillar 2022b are the protruding portions respectively disposed on the first electrode pillar 2022a and the second electrode pillar 2022b. In FIG. 7, (a) is illustrated by using the first electrode pillar 2022a as an example and shows the situation where the protruding portion 205 is protrudingly disposed on the outer wall of the first electrode pillar 2022a. There is no special restriction on the shape of the protruding portion 205 itself, as long as the protruding portion 205 is disposed in the manner of protruding from the partial outer walls of the first electrode pillar 2022a and the second electrode pillar 2022b, and may form accommodation spaces with the partial outer walls of the first electrode pillar 2022a and the second electrode pillar 2022b, as well as with the first bottom plate 2021a and the second bottom plate 2021b respectively. The accommodation space may accommodate at least the parts of the first sealing ring 203a and the second sealing ring 203b respectively close to the inner wall.

In another preferred embodiment, the first position-limiting portion 204a (position-limiting structure) and the second position-limiting portion 204b (position-limiting structure) disposed on the outer walls of the first electrode pillar 2022a and the second electrode pillar 2022b may also be recessed portions disposed on the outer walls of the first electrode pillar 2022a and the second electrode pillar 2022b. In FIG. 7, (b) is a partial cross-sectional view taking the first electrode pillar 2022a as an example. As shown in (b) of FIG. 7, a recessed portion 206 is formed on the outer peripheral surface of the pillar surrounding the first electrode pillar 2022a, and the recessed portion 206 and the first bottom plate 2021a together form an accommodation space. The accommodation space may accommodate at least the part of the first sealing ring 203a close to the inner wall. Similarly, the shape of the recessed portion 206 itself is not particularly limited, as long as the shape of the recessed portion 206 matches the shape of part of the first sealing ring 203a close to the inner wall.

In a preferred embodiment, the protruding portion 205 may be a plurality of protrusions disposed in an array on the outer wall of the electrode pillar along the circumferential direction of the first electrode pillar 2022a and the second electrode pillar 2022b. FIG. 8 takes the first electrode pillar 2022a as an example, showing a situation in which three protrusions 205a are disposed in an array and spaced apart around the outer surface of the first electrode pillar 2022a. As long as at least two, preferably three or more protrusions 205a are provided, they may limit the movement of the first sealing ring 203a on the surface of the first electrode pillar 2022a, thereby ensuring the sealing performance of the cover assembly 200 with a simple structure without the need for extra components.

In addition, the protruding portion 205 may also be a flange structure (not shown) disposed around the entire outer wall of the first electrode pillar 2022a. The flange structure may be easily formed by using a cutting process, and is integrally formed with the first electrode pillar 2022a at a low cost to limit the entire periphery of the first sealing ring 203a, thereby further improving the reliability of position limitation and thus ensuring the sealing performance of the cover assembly 200.

Additionally, the protruding portion 205 or the recessed portion 206 may be integrally formed with the first electrode pillar 2022a and the second electrode pillar 2022b. Specifically, the protruding portion 205 or the recessed portion 206 may be integrally formed during the stamping or cutting process for manufacturing the first electrode pillar 2022a and the second electrode pillar 2022b.

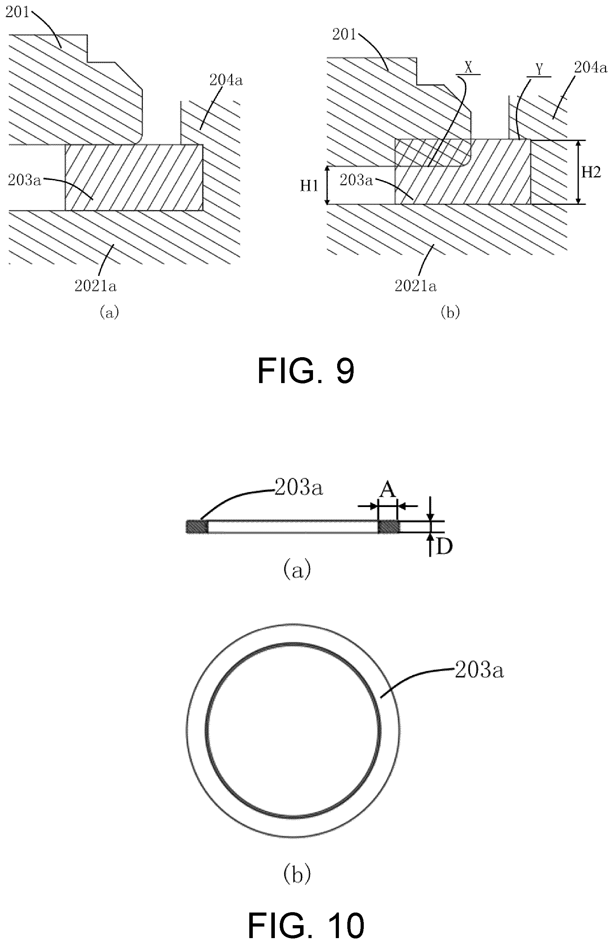

FIG. 9 is a partial enlarged view of part D shown in FIG. 6. In FIG. 9, (a) shows the state when the first sealing ring 203a is limited by the first position-limiting portion 204a but has not yet been compressed by the cover body 201. In FIG. 9, (b) shows the state when the cover assembly 200 is in a sealed state after the first sealing ring 203a is compressed by the cover body 201.

As shown in (b) of FIG. 9, when the cover assembly 200 is in a sealed state, the contact surface between the edge portion of the first electrode pillar mounting hole 2011 on the cover body 201 and the first sealing ring 203a is the first contact surface X, and the contact surface between the first position-limiting portion 204a and the first sealing ring 203a is the second contact surface Y. It can be seen that the height $H1$ of the part of (that is, the part close to the outer wall thereof) the first sealing ring 203a corresponding to the first contact surface X is less than the height $H2$ of the part of (that is, the part close to the inner wall thereof) the first sealing ring 203a corresponding to the second contact surface Y. In other words, the height of the part of the first sealing ring 203a that is in contact with and squeezed by the cover body 201 is less than the height of the part of the first sealing ring 203a that is limited by the first position-limiting portion 204a in contact with the first bottom plate 2021a. That is to say, in the sealed state, the first contact surface X is closer to the first bottom plate 2021a than the second contact surface Y.

Therefore, the part of the first sealing ring 203a that is in contact with and squeezed by the cover body 201 (that is, the part corresponding to the first contact surface X) has more compression deformation than other parts of the first sealing ring 203a to ensure the sealing performance of the cover assembly 200, whereas the part of (that is, the part corresponding to the second contact surface Y) the first sealing ring 203a that is in contact with the first position-limiting portion 204a does not need excessive compression deformation and only needs to be able to contact the first position-limiting portion 204a without being shifted. In this way, it is possible to ensure the sealing effect of the cover assembly 200 while ensuring the position limitation on the first sealing ring 203a.

In a preferred embodiment, the relationship between the height $H1$ of the part of (that is, the part close to the inner wall thereof) the first sealing ring 203a corresponding to the first contact surface X and the height $H2$ of the part of (that is, the part close to the outer wall thereof) the first sealing ring 203a corresponding to the second contact surface Y satisfies the numerical relationship of $0.2*H2<H1<0.8*H2$. Specifically, the preferred numerical relationship is $0.3*H2<H1<0.7*H2$, and the more preferred numerical relationship is $0.4*H2<H1<0.6*H2$.

The cover assembly 200 that satisfies the above mathematical relationship may take into account the relationship between the compression rate of the first sealing ring 203a that serves the sealing function at the first contact surface X and the compression rate of the first sealing ring 203a corresponding to the second contact surface Y and serving the position-limiting function in the thickness direction of the cover body. That is, the first sealing ring 203a at the first contact surface X may be properly compressed to ensure the sealing performance without overly compressing the first sealing ring 203a to avoid causing unnecessary and excessive deformation on the first sealing ring 203a corresponding to the second contact surface Y. In this way, it is possible to realize good position-limiting effect while taking into account the compression sealing performance.

FIG. 10 is a schematic structural view of the sealing ring in the embodiment of the present disclosure (taking first sealing ring 203a as an example). In FIG. 10, (a) is a lateral cross-sectional view of the first sealing ring 203a, and in FIG. 10, (b) is a front view of the first sealing ring 203a. The material of the first sealing ring 203a is not particularly limited, as long as the first sealing ring 203a may be compressed and deformed to achieve a sealing effect. As shown in FIG. 10, the difference A (the difference between the inner and outer radii) between the inner and outer diameters of the first sealing ring 203a in the radial direction is the width of the body of the first sealing ring 203a in the radial direction. The relationship between the difference A and the protruding height $L1$, by which the protruding portion 205 protrudes from the outer wall of the electrode pillar, or the relationship between the difference A and the recessing depth $L2$, by which the recessed portion 206 is recessed into the outer wall of the electrode pillar, satisfies the relationship of the mathematical formula 1/10A<L1<1/3A or 1/10A<L2<1/3A, preferably satisfies the relationship of the mathematical formula 1/9A<L1<1/4A or 1/9A<L2<1/4A, and more preferably satisfies the relationship of the mathematical formula 1/7A<L1<1/3A or

$$1/7A<L2<1/3A.$$

Corresponding to the radial width A of the body of the first sealing ring 203a, if the protruding portion 205 protrudes from the outer wall of the electrode pillar by a greater protruding height L1, or the recessed portion 206 is recessed into the outer wall of the electrode pillar by a greater recessing depth L2, the proportion of the body of the first sealing ring 203a that is limited by the protruding portion 205 or the recessed portion 206 is greater, and the position-limiting effect is better, but correspondingly, the proportion of the first sealing ring 203a that is in contact with the cover body 201 for sealing effect will be smaller, and the sealing effect will be affected. On the contrary, the less the protruding height L1 or the recessing depth L2, the less the part of the body of the first sealing ring 203a is limited, and the position-limiting effect might not be ideal, which will in turn affect the sealing effect. Therefore, when the above mathematical relationship is satisfied, both the position-limiting function and the sealing effect may be taken into consideration to ensure better sealing performance of the cover assembly 200.

In another preferred embodiment of the present disclosure, the relationship between the width W of the accommodation space in the thickness direction of the cover body 201 and the initial thickness D of the first sealing ring 203a before being compressed satisfies the mathematical formula: 0.7D < W<0.95D.

According to this preferred embodiment, the compression deformation ratio of the part of the first sealing ring 203a disposed in the accommodation space in the thickness direction of the cover body 201 is 70% or more and 95% or less as compared with the initial thickness D before the first sealing ring 203a is compressed. The numerical range ensures that the part of the first sealing ring 203a disposed in the accommodation space is appropriately compressed and deformed to stabilize the position, while not being overly compressed to avoid unnecessary impact on the sealing performance of other parts of the first sealing ring 203a. Preferably, the above compression deformation ratio satisfies the mathematical formula: 0.75D <W<0.90D, and more preferably satisfies the mathematical formula: 0.8D <W<0.85D.

Although the above embodiments are mainly described using the first sealing ring 203a as an example, the above description is also applicable to the second sealing ring 203b and will not be described again.

<Second Embodiment>

The basic structure of the cover assembly provided by the second embodiment of the present disclosure is substantially the same as the cover assembly 200 of the first embodiment. The same structures and reference numerals are cited and will not be described again. Different from the cover assembly 200 of the first embodiment, in the second embodiment, the first position-limiting portion 204a and the second position-limiting portion 204b used as the position-limiting structure and the protruding portion 205 or the recessed portion 206 in the more preferred embodiment are eliminated and replaced with the position-limiting structure, which is the first adhesive layer 207a and the second adhesive layer 207b respectively disposed at the contact surface between the first sealing ring 203a and the electrode pillar and the contact surface between the second sealing ring 203b and the electrode pillar.

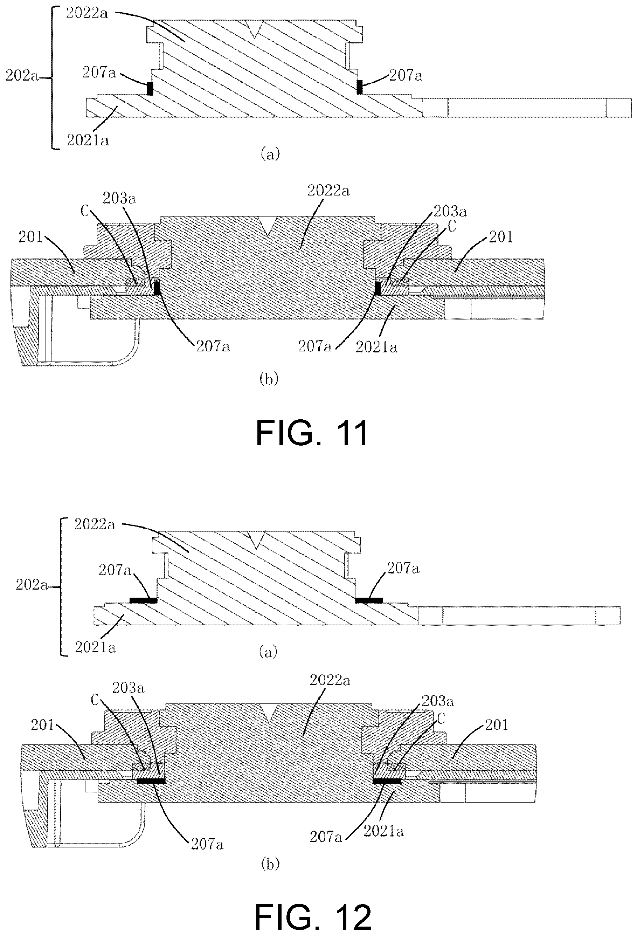

FIG. 11 to FIG. 14 show various situations in which the first adhesive layer 207a is disposed in the second embodiment. FIG. 11 shows the situation where the first adhesive layer 207a is preset on the outer wall side of the first electrode pillar 2022a, and is adhered to the inner side of the first sealing ring 203a. In FIG. 11, (a) is a schematic view in which the first adhesive layer 207a is preset on the outer wall side of the first electrode pillar 2022a which has not been sleeved through by the first sealing ring 203a. In FIG. 11, (b) is a schematic view in which the first sealing ring 203a is in contact with the first adhesive layer 207a and is disposed around the first electrode pillar 2022a and compressed. In FIG. 12, (a) is a schematic view in which the first adhesive layer 207a is preset on the first bottom plate 2021a and has not been sleeved through by the first sealing ring 203a. In FIG. 12, (b) is a schematic view in which the first sealing ring 203 a is in contact with the first adhesive layer 207a and is disposed around the first electrode pillar 2022a and compressed.

As shown in FIG. 11 and FIG. 12, when the first sealing ring 203a enters from the opposite side of the first bottom plate 2021a and is disposed around the first electrode pillar 2022a, before the first sealing ring 203a reaches the preset position, that is, the preset position of the first adhesive layer 207a, the first adhesive layer 207a does not come into contact with other parts, so the adhesion position will not be deviated, thereby ensuring accurate position limitation on the first sealing ring 203a.

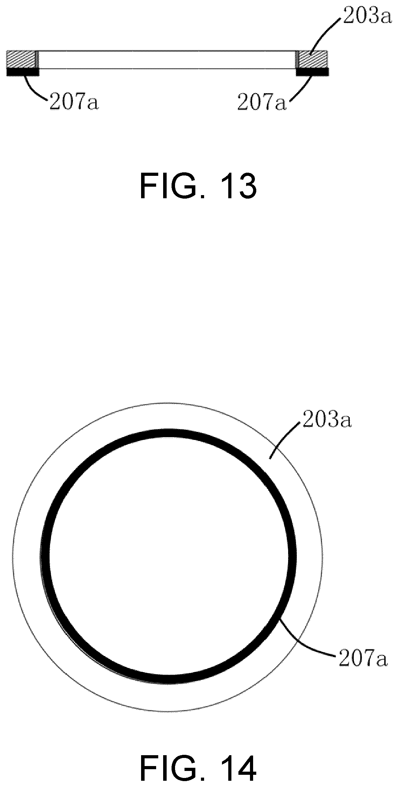

FIG. 13 shows the situation where the first adhesive layer 207a is preset on one side of the first sealing ring 203a close to the first bottom plate 2021a. The situation where the first sealing ring 203a and the first bottom plate 2021a of FIG. 13 are adhered together is the same as shown in (b) of FIG. 12, and the description will not be repeated. FIG. 14 shows the situation where the first adhesive layer 207a is preset on the inner side of the first sealing ring 203a. The situation where the first sealing ring 203a in FIG. 14 is adhered to the outer wall of the first electrode pillar 2022a is the same as shown in (b) of FIG. 11, and the description will not be repeated.

In the situations shown in FIG. 13 and FIG. 14, the first adhesive layer 207a as a position-limiting structure is preset on the body of the first sealing ring 203a. Therefore, the first adhesive layer 207a and the first sealing ring 203a may be produced and managed as a whole, thereby reducing the number of components and improving the production and management efficiency.

Moreover, in each of the above embodiments, the first adhesive layer 207a is used as the position-limiting structure. The structure is very simple and relatively inexpensive, and may be implemented without changing the shape of the outer wall of the existing electrode pillar.

Additionally, there is no particular restriction on the dimensional relationship between the first adhesive layer 207a and the first sealing ring 203a, such as the length, width and thickness of the first adhesive layer 207a, as long as the first adhesive layer 207a is able to be adhered to the first sealing ring 203a without being shifted.

The above description takes the first adhesive layer 207a as an example. The positional relationship and principle of the second adhesive layer 207b corresponding to the second electrode terminal 202b are the same as those of the first adhesive layer 207a, and will not be described again here.

In the above first and second embodiments, the position-limiting structure is explained by taking the first position-limiting portion 204a, second the position-limiting portion 204b; the protruding portion 205, the first protrusion 205a, the recessed portion 206, the first adhesive layer 207a and the second adhesive layer 207b as examples. Those skilled in the art can understand from the above description that as long as any structure is disposed on at least one side of the first electrode terminal 202a, second the electrode terminal 202b or the first sealing ring 203a, and the second sealing ring 203b, and the structure is able to limit the movement of the first sealing ring 203a and the second sealing ring 203b in the thickness direction of the cover body 201, such structures belong to the scope to be protected by the technical solution of the present disclosure regardless of the shape and material thereof.

<Third Embodiment>

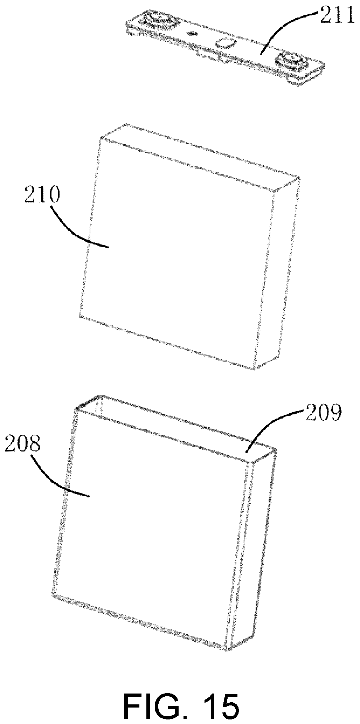

FIG. 15 is an exploded schematic view of a secondary battery provided in the third embodiment of the present disclosure. In FIG. 15, 208 is a housing having an upper opening 209, 210 is an electrode assembly inserted into the housing 208 through the upper opening 209, and 211 is a top cover closing the upper opening 209. The top cover 211 is the same as any cover assembly 200 provided in the first embodiment and the second embodiment.

The secondary battery provided in the third embodiment of the present disclosure uses the cover assembly 200 of the first or second embodiment, so the sealing performance of the secondary battery is well ensured.

<Fourth Embodiment>

A fourth embodiment of the present disclosure provides a battery assembly (not shown), which includes the secondary battery provided in the above third embodiment. Specifically, there is no limitation to a battery assembly composed of multiple secondary batteries in terms of the series-parallel connection relationship or the quantity and location layout relationship.

In the meantime, the fourth embodiment of the present disclosure also provides an electronic device (not shown) equipped with a battery assembly to provide a power supply for the electronic device. There is no particular limitation to the type of electronic device.

For the battery assembly and electronic device provided in this embodiment, because the cover assembly of the secondary battery used by the battery assembly and electronic device has good sealing performance, the overall sealing performance of the secondary battery and the battery assembly is ensured, and the use performance of the battery assembly and the electronic device is ensured.

**Claims**

1.    A cover assembly (200), comprising:

a cover body (201) opened with an electrode pillar mounting hole (2011, 2012);
an electrode terminal (202a, 202b) comprising:

a bottom plate (2021a, 2021b) disposed on one side of the cover body (201); and
an electrode pillar (2022a, 2022b) disposed on the bottom plate (2021a, 2021b), at least partially passes through the electrode pillar mounting hole (2011, 2012), and extending along a thickness direction of the cover body(201) to the other side of the cover body (201);

a sealing ring (203a, 203b) disposed around the electrode pillar (2022a, 2022b) and at least partially disposed between the cover body (201) and the bottom plate (2021a, 2021b);
wherein a position-limiting structure is disposed on at least one of the electrode terminal (202a, 202b) and the sealing ring (203a, 203b), and the position-limiting structure is used to limit a movement of the sealing ring (203a, 203b) in the thickness direction of the cover body (201).

2.    The cover assembly (200) according to claim 1, wherein the position-limiting structure comprises a position-limiting portion (204a, 204b) disposed on an outer wall of the electrode pillar (2022a, 2022b), and the sealing ring (203a, 203b) is partially disposed between the position-limiting portion (204a, 204b) and the bottom plate (2021a, 2021b).

3. The cover assembly (200) according to claim 2, wherein at least a part of the sealing ring (203a, 203b) close to an outer wall of the sealing ring (203a, 203b) is disposed between the cover body (201) and the bottom plate (2021a, 2021b); at least a part of the sealing ring (203a, 203b) close to an inner wall of the sealing ring (203a, 203b) is disposed between the position-limiting portion (204a, 204b) and the bottom plate (2021a, 2021b).

4. The cover assembly (200) according to claim 3, wherein at least the part of the sealing ring (203a, 203b) close to the inner wall of the sealing ring (203a, 203b) is higher than at least part of the sealing ring (203a, 203b) close to the outer wall of the sealing ring (203a, 203b); the position-limiting portion (204a, 204b) is in contact with the sealing ring (203a, 203b).

5. The cover assembly (200) according to any one of claims 3-4, wherein the position-limiting portion (204a, 204b) comprises a protruding portion (205) disposed on the outer wall of the electrode pillar (2022a, 2022b), and at least the part of the sealing ring (203a, 203b) close to the inner wall of the sealing ring (203a, 203b) is accommodated in an accommodation space formed by the protruding portion (205), a part of the outer wall of the electrode pillar (2022a, 2022b) portion and the bottom plate (2021a, 2021b); or the position-limiting portion (204a, 204b) comprises a recessed portion (206) disposed on the outer wall of the electrode pillar (2022a, 2022b), and at least the part of the sealing ring (203a, 203b) close to the inner wall of the sealing ring (203a, 203b) is accommodated in an accommodation space formed by the recessed portion (206) and the bottom plate (2021a, 2021b).

6. The cover assembly (200) according to claim 5, wherein the protruding portion (205) or the recessed portion (206) is disposed around the outer wall of the electrode pillar (2022a, 2022b).

7. The cover assembly (200) according to claim 6, wherein the protruding portion (205) comprises a plurality of protrusions (205a) disposed in an array on the outer wall of the electrode pillar (2022a, 2022b) along a circumferential direction of the electrode pillar (2022a, 2022b); or, the protruding portion (205) is a flange structure disposed around the outer wall of the electrode pillar (2022a, 2022b) along a circumferential direction of the electrode pillar (2022a, 2022b).

8. The cover assembly (200) according to any one of claims 2-4, wherein a first contact surface (X) is formed by a part of an edge portion of the electrode pillar mounting hole (2011, 2012) in contact with the sealing ring (203a, 203b),

a second contact surface (Y) is formed by a part of the position-limiting portion (204a, 204b) in contact with the sealing ring (203a, 203b), the first contact surface (X) is closer to the bottom plate (2021a, 2021b) than the second contact surface (Y).

9. The cover assembly (200) according to claim 8, wherein a part of the sealing ring (203a, 203b) corresponding to the first contact surface (X) has a thickness H1 in the thickness direction of the cover body (201), and a part of the sealing ring (203a, 203b) corresponding to the second contact surface (Y) has a thickness H2 in the thickness direction of the cover body (201), wherein a relationship between the thickness H1 and the thickness H2 satisfies a mathematical formula: $0.2 * H2 < H1 < 0.8 * H2$.

10. The cover assembly (200) according to claim 6, wherein the protruding portion (205) protrudes from the outer wall of the electrode pillar (2022a, 2022b) by a protruding height L1, the recessed portion (206) is recessed into the outer wall of the electrode pillar (2022a, 2022b) by a recessing depth L2, and a difference between an inner diameter and an outer diameter of the sealing ring (203a, 203b) is A, wherein a relationship between the protruding height L1 or the recessing depth L2 and the difference A satisfies a mathematical formula: $1/10A < L1 < 1/3A$ or $1/10A < L2 < 1/3A$.

11. The cover assembly (200) according to claim 5, wherein a relationship between a width W of the accommodation space in the thickness direction of the cover body (201) and an initial thickness D of the sealing ring (203a, 203b) before being compressed satisfies a mathematical formula: $0.7D < W < 0.95D$.

12. The cover assembly (200) according to claim 1, wherein the position-limiting structure is an adhesive layer (207a, 207b) disposed at a contact surface between the sealing ring (203a, 203b) and the electrode pillar (2022a, 2022b).

13. The cover assembly (200) according to claim 12, wherein the adhesive layer (207a, 207b) is preset on an outer wall side of the electrode pillar (2022a, 2022b) and bonded to an inner side of the sealing ring (203a, 203b), or

the adhesive layer (207a, 207b) is preset on a bottom plate (2021a, 2021b) side and bonded to a bottom side of the sealing ring (203a, 203b), the adhesive layer (207a, 207b) is preset on one side of the sealing ring (203a, 203b) close to the bottom plate (2021a, 2021b) and bonded to the bottom plate (2021a, 2021b), or

the adhesive layer (207a, 207b) is preset on the inner side of the sealing ring (203a, 203b) and bonded to the outer wall of the electrode pillar (2022a, 2022b).

14. A secondary battery, comprising a housing with an upper opening, an electrode assembly inserted into the housing through the upper opening, and a top cover closing the upper opening, wherein the top cover is the cover assembly (200) according to any one of claims 1-13.

15. A battery assembly, comprising the secondary battery according to claim 14.

16. An electronic device, comprising the battery assembly according to claim 15.

FIG. 1 (PRIOR ART)

FIG. 2 (PRIOR ART)

200

2012

201

2011

203b

203a

2021b

2022b

202b

202a

2021a

2022a

# FIG. 3

2011

2012

A

A

201

# FIG. 4

FIG. 5

FIG. 6

(a)

(b)

FIG. 7

FIG. 8

FIG. 9

FIG. 10

FIG. 11

FIG. 12

203a

207a                    207a

# FIG. 13

203a

207a

# FIG. 14

211

210

209

208

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 213716966 U